# EUROPEAN PATENT APPLICATION

(11) **EP 4 439 804 A1**
(43) Date of publication of application: **02.10.2024**
(21) Application number: 23777704.0
(22) Date of filing: 21.02.2023
(51) Int. Cl.: H01M 10/6568, H01M 10/613, H01M 50/242

(54) **THERMAL MANAGEMENT ASSEMBLY, BATTERY, AND ELECTRICAL DEVICE**

(30) Priority: 28.03.2022 CN 202220694810 U
(71) Applicant: Contemporary Amperex Technology (Hong Kong) Limited, Central, Central And Western District (HK)
(72) Inventor: ZHAO, Pengbo, Ningde, Fujian 352100 (CN); WANG, Yong, Ningde, Fujian 352100 (CN); WANG, Qing, Ningde, Fujian 352100 (CN); LIU, Ruidi, Ningde, Fujian 352100 (CN)
(74) Representative: Gong, Jinping
(86) International application number: PCT/CN2023/077438
(87) International publication number: WO 2023/185325

(57) **Abstract**

The present application belongs to the technical field of batteries and provides a thermal management assembly (100), a battery (11), and an electrical apparatus. Among them, the thermal management assembly (100) comprises: at least two fluid collecting tubes (110), and several fluid channels (120) disposed side by side between the fluid collecting tubes (110), wherein the fluid channel (120) comprises two side faces disposed opposite to each other, one of the side faces being used for carrying the battery cell and for heat exchange with the battery cell, and the other one of the side faces being provided with an energy-absorbing structure (130), with the stiffness of the energy-absorbing structure (130) being less than that of the fluid channels (120). When the bottom is subjected to an impact, the energy-absorbing structure will be damaged first to absorb and buffer the impact force generated by the impact on the bottom, so as to play the role of protecting the fluid channels, thereby enhancing the capability of the bottom structure of the battery system in absorbing the impact energy, so that the battery system can cope with the bottom impact situation.

## Description

The present application claims priority to Chinese patent application No. 202220694810.1, filed with the China National Intellectual Property Administration on March 28, 2022 and entitled "THERMAL MANAGEMENT ASSEMBLY, BATTERY, AND ELECTRICAL APPARATUS", the entire contents of which are incorporated herein by reference.

### Technical Field

The present application belongs to the technical field of batteries, and more specifically, relates to a thermal management assembly, a battery, and an electrical apparatus.

### Background

With the rapid development of new energy vehicles, the safety performance of battery systems is receiving more and more attention. Considering that a new energy vehicle may encounter a situation in which the battery cell is crushed or even damaged by an impact from an obstacle in the bottom direction during use.

It is necessary to provide a structure that enables the battery system to cope with an impact on the bottom during traveling.

### Summary of the Invention

In view of the above problem, it is an objective of the embodiments of the present application to provide a thermal management assembly, a battery, and an electrical apparatus to enable a battery system to cope with a situation of an impact on the bottom during traveling.

In a first aspect, the present application provides a thermal management assembly for thermal management of a battery cell, comprising: at least two fluid collecting tubes, and several fluid channels disposed side by side between the fluid collecting tubes, the interior of the fluid channels being used to accommodate fluid for thermal management, wherein the fluid channel comprises two side faces disposed opposite to each other, one of the side faces being used for carrying the battery cell and for heat exchange with the battery cell, and the other one of the side faces being provided with an energy-absorbing structure, with the stiffness of the energy-absorbing structure being less than that of the fluid channels.

The thermal management assembly provided in embodiments of the present application comprises fluid collecting tubes and fluid channels, wherein the fluid collecting tubes are used for fluid inlet and outlet, and the fluid channels are used to accommodate fluid for thermal management, so as to enable the thermal management assembly to realize a thermal management function of the battery system. The battery cell is provided on the side of the fluid channel that faces away from the energy-absorbing structure, and by providing the energy-absorbing structure on the side of the fluid channel that faces away from the battery cell, when the bottom is subjected to a collision/impact, since the stiffness of the energy-absorbing structure is less than that of the fluid channel, the energy-absorbing structure will be damaged first to absorb and buffer the impact force generated by the impact on the bottom, so as to play the role of protecting the fluid channels, thereby enhancing the capability of the bottom structure of the battery system in absorbing the impact energy so that the battery system can cope with the situation of an impact on the bottom.

In some embodiments, the energy-absorbing structure comprises a plurality of energy-absorbing cavities separated by first partitioning ribs, the energy-absorbing cavities being disposed sequentially on the fluid channel along a direction parallel to the fluid channel. On the one hand, the energy-absorbing structure in the form of energy-absorbing cavities can cover as much as possible the region where the fluid channels are located, so as to play a comprehensive protective role for the fluid channels; on the other hand, a plurality of energy-absorbing cavities can moderately enhance the capability of the energy-absorbing structure in absorbing impact energy, so as to absorb as much as possible the impact force generated by the impact on the bottom.

In some embodiments, the energy-absorbing structure comprises a plurality of energy-absorbing cavities separated by first partitioning ribs, the energy-absorbing cavities being disposed sequentially on the fluid channel in a direction perpendicular to a direction from the fluid channel to the energy-absorbing structure.

In some embodiments, the fluid channel comprises a plurality of channels separated by second partitioning ribs; and in a direction perpendicular to an extension direction of the fluid channel and a direction perpendicular to an extension direction of the fluid collecting tubes, the first partitioning rib comprises two ends disposed opposite to each other, and the two ends of any one of the first partitioning ribs are disposed on an extension line of one of the second partitioning ribs. Because after the energy-absorbing cavity is compressed upon an impact on the bottom, part of the force will continue to be transferred upward to the fluid channels along the first partitioning ribs, so it is necessary to arrange the first partitioning ribs in positions with stronger stiffness on the fluid channels, that is, the positions where the second partitioning ribs are located, so as to further avoid damage to the fluid channels.

In some embodiments, a section of the first partitioning rib that is perpendicular to an extension direction of the fluid channel is in an arc shape. The energy-absorbing structure comprises a plurality of energy-absorbing cavities separated by arc-shaped first partitioning ribs, wherein when the bottom is subjected to an impact, the first partitioning ribs collapse and the energy-absorbing cavities are compressed, thereby absorbing more impact force generated by the impact on the bottom.

In some embodiments, the number of the energy-absorbing cavities is less than the number of the channels, and each of the first partitioning ribs corresponds to a corresponding one of the second partitioning ribs.

In some embodiments, the number of the energy-absorbing cavities is the same as the number of the channels, and the energy-absorbing cavities are in one-to-one correspondence with the channels. Each of the energy-absorbing cavities separately protects one channel at the same projection position.

In some embodiments, the energy-absorbing cavity is surrounded by a first connecting wall and the first partitioning rib, and the channel is surrounded by a second connecting wall and the second partitioning rib; and the thickness of the first connecting wall is less than that of the second connecting wall. The wall thickness is set so that the stiffness of the energy-absorbing cavities is less than that of the channels in order to preferentially sacrifice the energy-absorbing cavities with lower stiffness to protect the fluid channels with higher stiffness when the bottom is subjected to an impact, thereby avoiding damage to the fluid channels.

In some embodiments, the thickness of the first partitioning rib is less than that of the second partitioning rib to further make the stiffness of the energy-absorbing cavities less than the fluid channels. Alternatively, in some embodiments, the thickness of the first partitioning rib is equal to that of the second partitioning rib.

In some embodiments, the energy-absorbing cavities are integrally formed with the fluid channels. The integrally molded fluid channels and energy-absorbing cavities can simplify the fabrication process of the thermal management assembly.

In a second aspect, the present application provides a battery, comprising a thermal management assembly as described above, a battery cell, a box body frame, and a bottom guard, wherein an accommodating cavity is enclosed by the box body frame and the bottom guard, the battery cell and the thermal management assembly being accommodated inside the accommodating cavity; and the bottom guard is further provided with a carrying portion for supporting the energy-absorbing structure, the carrying portion being disposed opposite the energy-absorbing structure. On the one hand, the carrying portion supports the energy-absorbing structure, and when the bottom is subjected to an impact, this carrying portion facilitates upward transfer of the impact force due to its contact with the energy-absorbing structure; on the other hand, this carrying portion is in indirect contact with the fluid channels, thereby increasing the heat dissipation area, improving the heat exchange between the internal and external air, thus improving the thermal management effect of the battery system, which means that in some embodiments, a projection of the energy-absorbing structure along a direction from the fluid channel to the energy-absorbing structure is located within a carrying surface of the carrying portion.

In some embodiments, there is also a buffer member provided between the energy-absorbing structure and the bottom guard. Because both the fluid channel and the bottom guard are made of rigid materials, by means of the addition of a soft buffer member between the two, friction or damage due to rigid contact between the fluid channel and the bottom guard is reduced.

In some embodiments, the surface of the fluid channel at a side close to the battery cell is further provided with a position-limit groove, a thermally conductive member for heat exchange with the battery cell being embedded in the position-limit groove. With the position-limit groove, the position where the thermally conductive member is disposed is pre-positioned to improve the assembling efficiency, thereby improving the efficiency of battery production.

In a third aspect, the present application provides an electrical apparatus, comprising a battery as described above, the battery being used to provide electric energy.

The above description is only an overview of the technical solutions of the present application. In order to more clearly understand the technical means of the present application to implement same according to the contents of the Specification, and in order to enable the above and other objectives, features and advantages of the present application to be more obvious and understandable, Detailed Description of the present application is exemplarily described below.

### Description of Drawings

By reading the detailed description of the preferred implementations below, various other advantages and benefits will become apparent to those of ordinary skill in the art. The drawings are for the purpose of illustrating the preferred implementations only and are not to be considered a limitation to the present application. Moreover, in all of the drawings, the same components are indicated by the same reference signs. In the drawings:
Fig. 1 is a structural schematic diagram of a vehicle provided in some embodiments of the present application;
Fig. 2 is a three-dimensional view of a battery provided in some embodiments of the present application;
Fig. 3 is a three-dimensional exploded view of a battery provided in some embodiments of the present application;
Fig. 4 is a structural schematic diagram of a thermal management assembly provided in some embodiments of the present application;
Fig. 5 is a cross-sectional view (partial) at A-A of Fig. 4;
Fig. 6 is an enlarged schematic diagram at B in Fig. 5;
Fig. 7 is a three-dimensional exploded view of another battery provided in some embodiments of the present application; and
Fig. 8 is an enlarged cross-sectional view of another battery provided in some embodiments of the present application (containing only a thermal management assembly and a bottom guard).

The reference signs in Detailed Description are as follows:
10. vehicle;
11. battery; 12. controller; 13. motor;
100. thermal management assembly; 110. fluid collecting tube; 120. fluid channel; 121. second partitioning rib; 122. channel; 123. second connecting wall; 130. energy-absorbing structure; 131. first partitioning rib; 131a. first end; 131b. second end; 132. energy-absorbing cavity; 133. first connecting wall; 130. position-limit groove; and 140. thermally conductive member;
200. box body frame;
300. bottom guard; 310. carrying portion;
400. buffer member.

### Detailed Description

Embodiments of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "comprising" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the descriptions of the embodiments of present application, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like are orientations or positional relationships as shown in the drawings, and are only for the purpose of facilitating and simplifying the descriptions of the embodiments of the present application instead of indicating or implying that devices or elements indicated must have particular orientations, and be constructed and operated in the particular orientations, so that these terms are not construed as limiting the embodiments of the present application.

In the description of the embodiments of the present application, unless otherwise expressly specified and limited, the technical terms "mount," "join," "connect," "fix," etc., should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

The safety performance test and evaluation of the battery system comprises aspects of electrical safety, mechanical safety, and environmental safety, and so on. Among them, in the test with respect to the aspect of mechanical safety, the bottoming operating condition needs to be considered. The bottoming operating condition refers to the chassis of the vehicle hitting the ground or ground projections during traveling. The vehicle passing over speed humps, hitting curbs, going uphill, driving on bumpy roads, and crushing rocks or bricks on the road surface can all cause bottoming. The situation where the wheels bring up stones and hit the bottom of the vehicle can also be categorized as a bottoming operating condition. For new energy vehicles with power batteries arranged under the bottom plate, because the bottom surface of the power batteries is not protected by the vehicle body structure and has a large area, it is more susceptible to scratches and impacts. Bottoming operating conditions can easily cause battery damage and, in severe cases, fire and explosion. Moreover, the damage caused by bottoming is at the bottom of the battery, which is not easy to detect and has a hidden nature. In some bottoming accidents, although at that time no short circuits or fires occurred and the vehicle was able to continue driving, the battery pack had been severely deformed. If the user does not find and deal with the problem in time, the battery cells and high voltage devices continue to be in a crushed state, and the battery pack may spontaneously combust after a period of time.

There are two main modes of damage to the power battery structure under bottoming operating conditions. One is the bottom-scraping mode, in which the front and bottom of the power cell are subjected to scratches in the forward and backward directions, causing the loads to be mainly in the horizontal direction, with some vertical loads also being transferred upward in the form of fractional forces. The other is the bottom-crashing mode, in which the bottom surface of the power battery is subjected to upward crushing or impact. The loads are mainly in the vertical direction, which usually causes deformation of the battery bottom shell in the vertical direction, and in severe cases, may puncture the internal cell body after the battery bottom case is pierced through, and this is just the situation primarily taken into account in the embodiments of the present application.

The applicant notes that in the prior art, in order to cope with the situation of the bottom being impacted while traveling, the bottom structure of the battery system has to be very strong, and usually only the casting case with sufficient thickness and designed with a large number of reinforcing ribs can meet the standard. However, at present, the vast majority of new energy vehicles are made of extruded aluminum, steel plate or aluminum plate bottom structure, which is prone to large deformation under large loads. In order to cope with the situation where the bottom is impacted while driving, it is necessary to add components such as protective beams, bottom guards, and multiple reinforcing plates, which not only greatly increases the production cost, but also reduces the efficiency of production.

Considering the need to cope with a situation where the bottom is subjected to an impact while traveling, and in order to alleviate the problem of the large amount of use of assemblies, the applicant has found, through research, that since one side face of a fluid channel in the thermal management assembly is used to contact the battery cell to realize the thermal management function of the battery system, an energy-absorbing structure may be provided on the other side face of the fluid channel opposite to the above side face, and the stiffness of this energy-absorbing structure is less than that of the fluid channel, so that in case of an impact on the bottom, the energy-absorbing structure is preferentially sacrificed to protect the fluid channel, and thus protect the battery cell, whereby it is not necessary to arrange a reinforcing plate at the position of each battery pack, thereby ultimately realizing the purposes of lowering the cost of production of the battery product and increasing the efficiency of production.

The battery disclosed in embodiments of the present application can be used, but not limited to, in an electrical apparatus such as a vehicle, a ship, or an aircraft.

Examples of the present application provide an electrical apparatus that uses a battery to provide electric energy, and the electrical apparatus may be, but is not limited to, a mobile phone, a tablet, a laptop, an electric toy, an electric tool, a battery vehicle, an electric vehicle, a ship, a spacecraft, and so on. Among them, the electric toy may include a stationary or mobile electric toy, for example, a game console, an electric car toy, an electric ship toy, and an electric aircraft toy, and the like, and the spacecraft may include an aircraft, a rocket, a space shuttle and a spaceship, and the like. For the convenience of description, the following embodiments are illustrated with an example in which the electrical apparatus according to an embodiment of the present application is a vehicle 10.

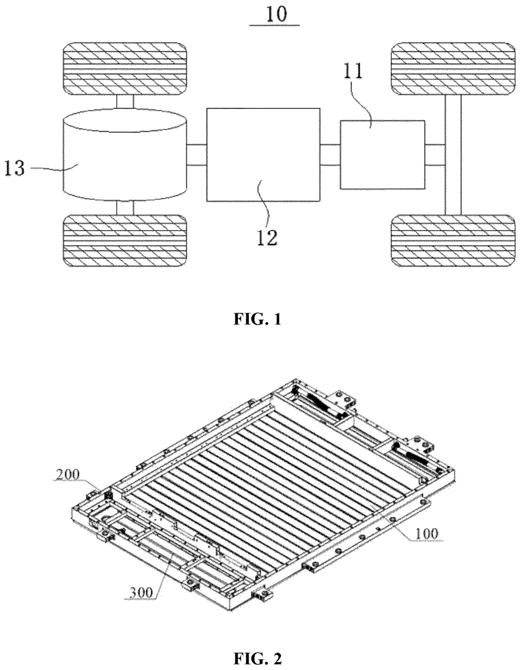

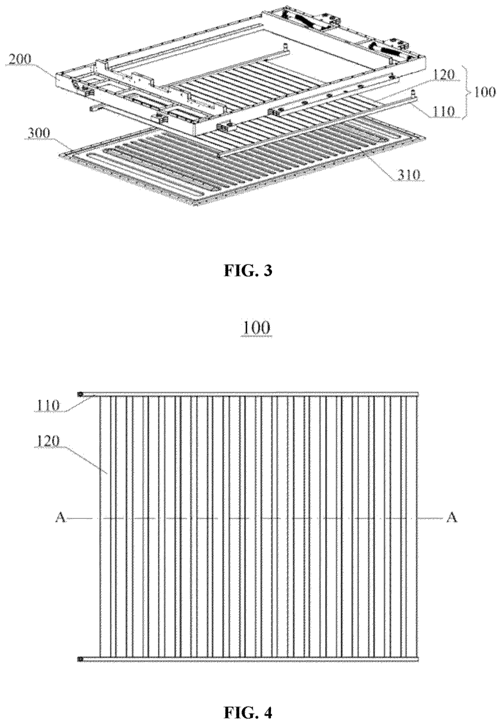

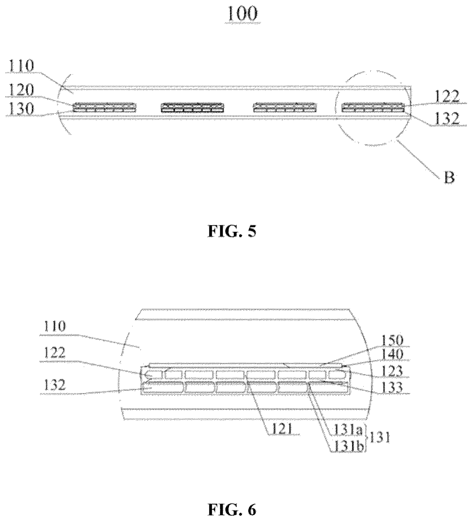

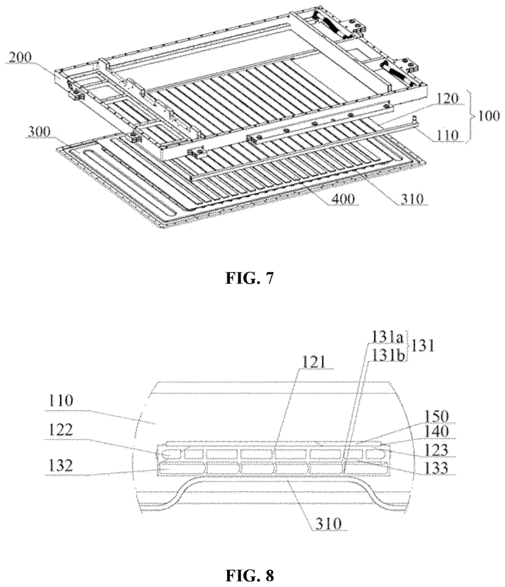

Fig. 1 is a structural schematic diagram of a vehicle provided in some embodiments of the present application; Fig. 2 is a three-dimensional view of a battery provided in some embodiments of the present application; Fig. 3 is a three-dimensional exploded view of a battery provided in some embodiments of the present application; Fig. 4 is a structural schematic diagram of a thermal management assembly provided in some embodiments of the present application; Fig. 5 is a cross-sectional view (partial) at A-A of Fig. 4; Fig. 6 is an enlarged schematic diagram at B in Fig. 5; and Fig. 7 is a three-dimensional exploded view of another battery provided in some embodiments of the present application.

Referring to Fig. 1, the vehicle 10 may be a fuel vehicle, a gas vehicle, or a new energy vehicle, and the new energy vehicle may be an all-electric vehicle, a hybrid electric vehicle, an extended range electric vehicle, or the like. The interior of the vehicle 10 is arranged with a battery 11, and the battery 11 may be arranged at the bottom or head or tail of the vehicle 10. The battery 11 may be used to power the vehicle 10. For example, the battery 11 may be used as an operating power source of the vehicle 10. The vehicle 10 may further comprise a controller 12 and a motor 13, wherein the controller 12 is used to control the battery 11 to supply power to the motor 13, the motor 13 is used for starting the vehicle 10, and additionally, the battery 11 may also be used to meet operational power requirements for navigation and driving.

In some embodiments, the battery 11 can be used not only as an operating power source for the vehicle 10, but also as a driving power source for the vehicle 10, replacing or partially replacing fossil energy sources such as fuel or natural gas, to convert electric power into mechanical power to provide driving power for the vehicle 10.

Referring to Figs. 2 and 3, according to some embodiments of the present application, the battery 11 comprises: a thermal management assembly 100, battery cells, a box body frame 200, and a bottom guard 300, wherein an accommodating cavity is enclosed by the box body frame 200 and the bottom guard 300, the battery cell and the thermal management assembly 100 being accommodated inside the accommodating cavity; and the bottom guard 300 is further provided with a carrying portion 310 for supporting the energy-absorbing structure 130, the carrying portion 310 being disposed opposite the energy-absorbing structure 130.

It is to be noted that the battery 11 disclosed in embodiments of the present application can not only be applied to energy storage power source systems such as hydro, thermal, wind and solar power stations, but also be widely applied to electric transportation vehicles such as electric bicycles, electric motorcycles, electric cars, as well as military equipment and aerospace and other fields, which in not specifically limited herein.

In order to solve the problem of heat dissipation or thermal runaway resulting from the operation of the battery 11 at too high or too low a temperature, and to ensure that the battery 11 operates at a suitable temperature, the battery 11 comprises a thermal management assembly 100 that abuts against the outward side of the battery cell. As shown in Figs. 4 and 5, in a first aspect, the present application provides a thermal management assembly 100, which thermal management assembly 100 is used for thermal management of the battery cell. The thermal management assembly 100 comprises at least two fluid collecting tubes 110, and several fluid channels 120 disposed side by side between the fluid collecting tubes 110, the interior of the fluid channels 120 being used to accommodate fluid for thermal management, wherein the fluid channel 120 comprises two side faces disposed opposite to each other, one of the side faces being used for carrying the battery cell and for heat exchange with the battery cell, and the other one of the side faces being provided with an energy-absorbing structure 130, with the stiffness of the energy-absorbing structure 130 being less than that of the fluid channels 120.

It can be understood that in the case of a large number of battery cells, if the plurality of battery cells after arrangement has a large size in the length direction, the length size of the fluid channel 120 that is correspondingly needed will also be large. When the size of the fluid channel 120 does not meet the use requirements, the number of the fluid collecting tubes 110 can be increased and the fluid collecting tubes 110 can be used as intermediate joints to splice the fluid channels 120 of smaller length sizes, thereby meeting the use requirements. In this case, if the number of fluid collecting tubes 110 is more than two, mounting holes need to be provided on the two opposite sides of the fluid collecting tube 110 located in the intermediate position to realize the function of intermediate jointing.

Moreover, each fluid collecting tube 110 is opened with mounting holes for communication with the fluid channel 120, and two adjacent fluid collecting tubes 110 are provided in a manner in which the mounting holes thereof are opposite. Here, the spacing between two adjacent mounting holes on each fluid collecting tube 110 determines the spacing between two adjacent fluid channels 120. The number of mounting holes opened on each fluid collecting tube 110 is consistent with the number of fluid channels 120 that are disposed side by side, whereas the number of fluid channels 120 that are disposed side by side is in turn positively correlated to the size of the plurality of battery cells in the width direction after being arranged. It can be understood that in the case where the plurality of battery cells have a large size in the width direction after being arranged, the plurality of fluid collecting tubes 110 can also be spliced along the above width direction to meet the use requirements. In this case, fluid collecting tubes 110 adjacent in the width direction may be in communication with each other using a connecting assembly so as to enable the entire thermal management assembly 100 to be connected as an integral body, thereby realizing the circulating flowing of the fluid for thermal management in the thermal management assembly 100. Optionally, when the length size of the fluid channels 120 and the length size of the fluid collecting tubes 110 both meet the use requirements for thermal management of the plurality of battery cells in the battery 11, the number of fluid collecting tubes 110 may be two.

In this embodiment, two fluid collecting tubes 110 are illustrated as an example, wherein one fluid collecting tube 110 is provided with a fluid inlet port and the other liquid collecting tube is provided with a fluid outlet port. Several fluid channels 120 are disposed side by side between two adjacent fluid collecting tubes 110, and two ends of each fluid channel 120 are each inserted into one of a set of mounting holes provided opposite to each other to cause the two liquid collecting tubes to be in communication with each fluid channel 120. The fluid for thermal management enters into one fluid collecting tube 110 through the fluid inlet port, passes through the fluid channel 120, and exits through the other fluid collecting tube 110, and the fluid for thermal management can realize the thermal management function of the battery 11 system during the flow in the fluid channel 120.

Here, the fluid channel 120 comprises two side faces disposed opposite to each other, wherein one of the side faces is located at a position in the entire battery 11 structure that is close to the battery cell, and this side face is used to contact with the battery cell for realizing the thermal management function; and the other side face is located at a position in the entire battery 11 structure that faces away from the battery cell, and this side face is provided with an energy-absorbing structure 130, and the stiffness of the energy-absorbing structure 130 is less than that of the fluid channel 120 to realize the protection function. Optionally, as shown in Fig. 5, the fluid channel 120 may be a harmonica-shaped tube, wherein the fluid channel 120 has a square shaped profile and a flattened harmonica-shaped cross-section so as to improve the heat transfer efficiency. In some implementations, the energy-absorbing structure 130 may be made of the same material as the fluid channel 120, such as aluminum alloy. In other implementations, the energy-absorbing structure 130 and the fluid channel 120 may also be made of different materials, which in not specifically limited herein.

In summary, the thermal management assembly 100 provided in embodiments of the present application comprises fluid collecting tubes 110 and fluid channels 120, the fluid collecting tubes 110 being used for fluid inlet and outlet, and the fluid channels 120 being used to accommodate fluid for thermal management, so as to enable the thermal management assembly 100 to realize a thermal management function of the battery 11 system. The battery cell is provided on the side of the fluid channel 120 that faces away from the energy-absorbing structure, and by providing the energy-absorbing structure 130 on the side of the fluid channel 120 that faces away from the battery cell, when the bottom is subjected to an impact, since the stiffness of the energy-absorbing structure 130 is less than that of the fluid channel 120, the energy-absorbing structure 130 will be damaged first to absorb and buffer the impact force generated by the impact on the bottom, so as to play the role of protecting the fluid channels 120, thereby enhancing the strength of the bottom structure of the battery 11 system. In some embodiments of the present application, referring to Figs. 5 and 6, the energy-absorbing structure 130 comprises a plurality of energy-absorbing cavities 132 separated by first partitioning ribs 131, the energy-absorbing cavities 132 being disposed sequentially on the fluid channel 120 along a direction parallel to the fluid channel 120. The energy-absorbing structure 130 may be in various forms, for example, the energy-absorbing structure 130 comprises a plurality of energy-absorbing cavities 132 separated by first partitioning ribs 131, the energy-absorbing cavities 132 being disposed sequentially on the fluid channel 120 along a direction perpendicular to the direction from the fluid channel 120 to the energy-absorbing structure 130, as long as the stiffness of the energy-absorbing structure 130 is less than the stiffness of the fluid channel 120. For another example, the energy-absorbing structure 130 comprises a plurality of energy-absorbing ribs uniformly distributed on the side of the fluid channel 120 that faces away from the battery cell, and the stiffness of the energy-absorbing ribs is less than the stiffness of the fluid channels 120, so that when the bottom is subjected to an impact, the energy-absorbing ribs are firstly sacrificed in order to protect the fluid channel 120. Here, the number of energy-absorbing cavities 132 is related to the size of the fluid channel 120, and the larger the size of the fluid channel 120, the greater the number of energy-absorbing cavities 132 is accordingly required to ensure the protection effect. Moreover, the sizes of the plurality of energy-absorbing cavities 132 may be the same so as to simplify the fabrication process; or the sizes of the plurality of energy-absorbing cavities 132 may also be different so as to adapt to the specific specifications of the fluid channel 120, which is not specifically limited herein. Therefore, on the one hand, the energy-absorbing structure 130 in the form of a plurality of energy-absorbing cavities 132 separated by the first partitioning ribs 131 can cover more of the area where the fluid channel 120 is located to provide a more comprehensive protection for the fluid channel 120; on the other hand, the plurality of energy-absorbing cavities 132 can moderately enhance the stiffness of the energy-absorbing structure 130, and at the same time can increase the total amount of impact energy absorbed.

In some embodiments of the present application, with continued reference to Fig. 6, the fluid channel 120 comprises a plurality of channels 122 separated by second partitioning ribs 121. By using the second partitioning ribs 121 to separate the fluid channel 120 into a plurality of thin branch channels 122, the purpose of improving the heat exchange efficiency is achieved. Moreover, while achieving the same heat exchange effect, the structure of the fluid channel 120 in this embodiment will be simpler and thus easier to assemble. The energy-absorbing structure 130 comprises a plurality of energy-absorbing cavities 132 separated by the first partitioning ribs 131. Here, in a direction perpendicular to the extension direction of the fluid channel 120 and in a direction perpendicular to the extension direction of the fluid collecting tube 110, the first partitioning rib 131 comprises two ends (including a first end 131a and a second end 131b) provided opposite to each other, and the two ends of any one of the first partitioning ribs 131 are located on the extension line of one of the second partitioning ribs 121. Because after the energy-absorbing cavity 132 is compressed upon an impact on the bottom, part of the force will continue to be transferred upward to the fluid channels 120 along the first partitioning ribs 131, so it is necessary to arrange the first partitioning ribs 131 in positions with stronger stiffness on the fluid channels 120, that is, the positions where the second partitioning ribs 121 are located, so as to further avoid damage to the fluid channels 120. In this way, even if part of the force continues to be transferred upward along the first partitioning ribs 131, or the first partitioning ribs 131 are damaged and crushed upward, the arrival positions are also the second partitioning ribs 121, while the second partitioning ribs 121 are less likely to be damaged as they are part of the fluid channels 120 with greater stiffness.

In some embodiments of the present application, in order to further buffer off the impact force due to the impact on the bottom, the section of the first partitioning rib 131 that is perpendicular to the extension direction of the fluid channel 120 is in an arc shape, as shown in Fig. 6. In other embodiments, the section of the first partitioning rib 131 may also be in an arc-like shape, or any other smoothly transitioning curved shape. In this way, the energy-absorbing structure 130 comprises a plurality of energy-absorbing cavities 132 separated by arc-shaped first partitioning ribs 131, wherein when the bottom is subjected to an impact, the first partitioning ribs 131 collapse and the energy-absorbing cavities 132 are compressed, thereby absorbing more impact force generated by the impact on the bottom.

In some embodiments of the present application, the number of the energy-absorbing cavities 132 is the same as the number of the channels 122, and the energy-absorbing cavities 132 are in one-to-one correspondence with the channels 122. In order to serve to protect the fluid channel 120, optionally, the size of the energy-absorbing structure 130 in a direction perpendicular to the extension direction of the fluid channel 120 is greater than or equal to the size of the fluid channel 120 in this direction. Specifically, the energy-absorbing structure 130 comprises a plurality of energy-absorbing cavities 132 separated by first partitioning ribs 131, and the fluid channel 120 comprises a plurality of channels 122 separated by second partitioning ribs 121. Here, the number of energy-absorbing cavities 132 and the number of channels 122 may be the same, and each of the energy-absorbing cavities 132 separately protects one channel 122 at the same projected location. In other embodiments, the number of energy-absorbing cavities 132 may also be different from the number of channels 122, and taking into account the force transfer, the number of energy-absorbing cavities 132 is less than the number of channels 122, so that one energy-absorbing cavity 132 can protect one channel 122 or multiple channels 122.

In some embodiments of the present application, with continued reference to Fig. 6, the energy-absorbing cavity 132 is surrounded by a first connecting wall 133 and the first partitioning rib 131, and the channel 122 is surrounded by a second connecting wall 123 and the second partitioning rib 121, which means that, in this embodiment, both the energy-absorbing cavities 132 and the channels 122 are square-shaped. In order to make the stiffness of the energy-absorbing cavities 132 less than the stiffness of the channels 122, the thickness of the first connecting wall 133 is set to be less than the thickness of the second connecting wall 123. Here, the material of the energy-absorbing cavities 132 and the material of the channels 122 may be the same or different. In the case where the material of the energy-absorbing cavities 132 is the same as the material of the channels 122, there is no limitation on the material used for the two; while in the case where the material of the energy-absorbing cavities 132 and the material of the channels 122 are different, optionally, the stiffness of the material of the energy-absorbing cavities 132 is less than the stiffness of the material of the channels 122. It is to be noted that in the case where one connecting wall is shared between the fluid channels 120 and the energy-absorbing cavities 132, the thickness of the connecting wall should adopt the set thickness of the first connecting wall 133. The wall thickness is provided so that the stiffness of the energy-absorbing cavities 132 is less than that of the channel 122 in order to preferentially sacrifice the energy-absorbing cavities 132 with lower stiffness to protect the channels 122 with higher stiffness when the bottom is subjected to an impact, thereby avoiding damage to the fluid channels 120.

In some embodiments of the present application, to weaken the stiffness of the energy-absorbing cavities 132 even further, the thickness of the first partitioning ribs 131 is less than the thickness of the second partitioning ribs 121 to further make the stiffness of the energy-absorbing cavities 132 less than the stiffness of the channels 122. In some implementations, since the energy-absorbing cavities 132 and the channels 122 can be prepared and molded of different materials, and the stiffness of the material of the energy-absorbing cavities 132 is less than the stiffness of the material of the channels 122, the thickness of the first partitioning ribs 131 can be equal to the thickness of the second partitioning ribs 121 at this time, which can also satisfy the requirement that the stiffness of the energy-absorbing cavities 132 is less than the stiffness of the channels 122, so that when the bottom is subjected to a collision/impact, the energy-absorbing structure will be damaged first to absorb and buffer the impact force generated due to the impact on the bottom, so as to play the role of protecting the fluid channels.

In some embodiments of the present application, the energy-absorbing cavities 132 are integrally formed with the fluid channels 120, and the integrally molded fluid channels 120 and energy-absorbing cavities 132 can simplify the fabrication process of the thermal management assembly 100. In other embodiments, the energy-absorbing cavities 132 and the channels 122 may also be made in a way that they are individually fabricated and then spliced together, which is not specifically limited herein.

In a second aspect, as shown in Figs. 2, 3, and 8, the present application provides a battery 11, the battery 11 comprising: a thermal management assembly 100 as described above, battery cells (not shown in the figure), a box body frame 200, and a bottom guard 300, wherein an accommodating cavity is enclosed by the box body frame 200 and the bottom guard 300, the battery cell and the thermal management assembly 100 being accommodated inside the accommodating cavity; and the bottom guard 300 is further provided with a carrying portion 310 for supporting the energy-absorbing structure 130, the carrying portion 310 being disposed opposite the energy-absorbing structure 130.

Among them, the battery cell is the smallest unit that specifically realizes the conversion of electric energy and chemical energy. The battery cell may be a secondary battery 11 or a primary battery 11; it may also be a lithium-sulfur battery 11, a sodium-ion battery 11, or a magnesium-ion battery 11, but is not limited thereto. The battery cells may be cylindrical, flat, rectangular, or in other shapes.

When the number of battery cells is large, the plurality of battery cells may be packed in the form of battery 11 modules to improve the integrity of the battery 11 system. Each battery 11 module comprises a plurality of battery cells, and the plurality of battery cells may be connected in series or in parallel or in a mixed connection, the mixed connection meaning that the plurality of battery cells are connected both in series and in parallel. The battery 11 modules may be a plurality, and the plurality of battery 11 modules may be connected in series or in parallel or in mixed connection, the mixed connection meaning that there are both series and parallel connections in the plurality of battery 11 modules. Moreover, fluid channels 120 of a corresponding number and size are adapted according to the number and size of the battery 11 modules.

In some embodiments, the battery 11 also comprises a battery box, the battery box is used to provide an accommodating space for the battery cells and the thermal management assembly 100, and the battery box may be of various structures. Referring to Fig. 7, the battery box specifically comprises a box body frame 200 and a bottom guard 300, the box body frame 200 and the bottom guard 300 enclosing each other to form an accommodating cavity, which is used to accommodate the thermal management assembly 100 and the battery cells. In an implementation, the box body frame 200 comprises an upper cover plate, the bottom guard 300 serves as a lower cover plate, the box body frame 200 and the bottom guard 300 are assembled in a mutually covering manner, and the box body frame 200 and the bottom guard 300 together define the accommodating space. Of course, the battery box formed by the box body frame 200 and the bottom guard 300 may be of various shapes, such as, for example, a cylinder, a rectangle, and the like. Optionally, the stiffness of the bottom guard 300 is greater than the stiffness of the box body frame 200. In addition, the bottom guard 300 carries the weight of the entire battery 11 product, and may be manufactured by bending and welding sheet metal members, or stamping and welding sheet metal members, or casting aluminum alloy, or die-casting aluminum alloy, and so on.

In addition, as shown in Fig. 8, the bottom shield 300 is provided, at positions opposite to energy-absorbing structures 130, with carrying portions 310 in one-to-one correspondence therewith, that is, one energy-absorbing structure 130 is provided opposite to one carrying portion 310. On the one hand, the carrying portion 310 supports the energy-absorbing structure 130, and when the bottom is subjected to an impact, the carrying portion facilitates the upward transfer of the impact force due to its contact with the energy-absorbing structure; on the other hand, the carrying portion 310 is indirectly contacted with the fluid channels 120, thereby increasing the heat dissipation area, improving the heat exchange between the internal and external air, thus improving the thermal management effect of the battery 11 system. It is to be understood that one carrying portion 310 may be arranged to cover the entire region where one energy-absorbing structure 130 is located, which means that the projections of the carrying portion 310 and the energy-absorbing structure 130 on the bottom guard 300 are completely overlapped, thus further improving the effect of force transfer and the effect of heat dissipation. Of course, the carrying portion 310 may also be one in number and it supports all of the energy-absorbing structures 130 at the same time.

In some embodiments of the present application, as shown in Fig. 7, there is also a buffer member 400 provided between the energy-absorbing structure 130 and the bottom guard 300, wherein the buffer member 400 may be made of a soft material, may be elastic, or may not be elastic, which is not specifically limited herein. Because both the fluid channel 120 and the bottom guard 300 are made of rigid materials, by means of the addition of a soft buffer member 400 between the two, friction or damage due to rigid contact between the fluid channel 120 and the bottom guard 300 is reduced.

In some embodiments of the present application, as shown in Fig. 6, the surface of the fluid channel 120 at a side close to the battery cell is further provided with a position-limit groove 140, a thermally conductive member 150 for heat exchange with the battery cell being embedded in the position-limit groove 140, with the heat-conducting member 150 being used to conduct heat of the battery cell to the fluid channel 120. Here, the number of position-limit grooves 140 may be one, or it may be more than one, depending on the size of the fluid channels 120. The position-limit grooves 140 may also be integrally formed with the fluid channels 120 and the energy-absorbing structure 130 to simplify the production process. With the position-limit groove 140, the position where the thermally conductive member 150 is disposed is pre-positioned to improve the assembling efficiency, thereby improving the efficiency of production of the battery 11.

In a third aspect, the present application provides an electrical apparatus, comprising a battery 11 as described above, the battery 11 being used to provide electric energy.

It can be understood that the electrical apparatus comprises, but is not limited to, a mobile phone, a tablet, a laptop, an electric toy, an electric tool, a battery vehicle, an electric vehicle, a ship, a spacecraft, and so on. Among them, the electric toy may include a stationary or mobile electric toy, for example, a game console, an electric car toy, an electric ship toy, and an electric aircraft toy, and the like, and the spacecraft may include an aircraft, a rocket, a space shuttle and a spaceship, and the like.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather comprises all technical solutions falling within the scope of the claims.

## Claims

1. A thermal management assembly for thermal management of a battery cell, comprising:
at least two fluid collecting tubes, and several fluid channels disposed side by side between the fluid collecting tubes, the interior of the fluid channels being used to accommodate fluid for thermal management; wherein
the fluid channel comprises two side faces disposed opposite to each other, one of the side faces being used for heat exchange with the battery cell, and the other one of the side faces being provided with an energy-absorbing structure, with the stiffness of the energy-absorbing structure being less than that of the fluid channels.

2. The thermal management assembly according to claim 1, wherein the energy-absorbing structure comprises a plurality of energy-absorbing cavities separated by first partitioning ribs, the energy-absorbing cavities being disposed sequentially on the fluid channel along a direction parallel to the fluid channel.

3. The thermal management assembly according to claim 1, wherein the energy-absorbing structure comprises a plurality of energy-absorbing cavities separated by first partitioning ribs, the energy-absorbing cavities being disposed sequentially on the fluid channel in a direction perpendicular to a direction from the fluid channel to the energy-absorbing structure.

4. The thermal management assembly according to claim 2 or 3, wherein the fluid channel comprises a plurality of channels separated by second partitioning ribs; and
in a direction perpendicular to an extension direction of the fluid channel, the first partitioning rib comprises two ends disposed opposite to each other, and the two ends of any one of the first partitioning ribs are disposed on an extension line of one of the second partitioning ribs.

5. The thermal management assembly according to claim 2, wherein a section of the first partitioning rib that is perpendicular to an extension direction of the fluid channel is in an arc shape.

6. The thermal management assembly according to claim 4, wherein the number of the energy-absorbing cavities is less than the number of the channels, and the first partitioning rib corresponds to a corresponding one of the second partitioning ribs.

7. The thermal management assembly according to claim 4, wherein the number of the energy-absorbing cavities is the same as the number of the channels, and the energy-absorbing cavities are in one-to-one correspondence with the channels.

8. The thermal management assembly according to claim 4, wherein the energy-absorbing cavity is surrounded by a first connecting wall and the first partitioning rib, and the channel is surrounded by a second connecting wall and the second partitioning rib; and
the thickness of the first connecting wall is less than that of the second connecting wall.

9. The thermal management assembly according to claim 8, wherein the thickness of the first partitioning rib is less than that of the second partitioning rib.

10. The thermal management assembly according to claim 8, wherein the thickness of the first partitioning rib is equal to that of the second partitioning rib.

11. The thermal management assembly according to any one of claims 2-10, wherein the energy-absorbing cavities are integrally formed with the fluid channels.

12. A battery, comprising the thermal management assembly according to any one of claims 1 to 11, a battery cell, a box body frame, and a bottom guard, wherein an accommodating cavity is enclosed by the box body frame and the bottom guard, the battery cell and the thermal management assembly being accommodated inside the accommodating cavity; and
the bottom guard is further provided with a carrying portion for supporting the energy-absorbing structure, the carrying portion being disposed opposite to the energy-absorbing structure.

13. The battery according to claim 12, wherein a projection of the energy-absorbing structure along a direction from the fluid channel to the energy-absorbing structure is located within a carrying surface of the carrying portion.

14. The battery according to claim 12, wherein there is also a buffer member provided between the energy-absorbing structure and the bottom guard.

15. The battery according to claim 12, wherein the surface of the fluid channel at a side close to the battery cell is further provided with a position-limit groove, a thermally conductive member for heat exchange with the battery cell being embedded in the position-limit groove.

16. An electrical apparatus, comprising the battery according to any one of claims 12-15, the battery being used to provide electric energy.
